# EUROPEAN PATENT SPECIFICATION

(11) **EP 3 336 334 B1**
(45) Date of publication and mention of the grant of the patent: **26.05.2021**
(21) Application number: 17207856.0
(22) Date of filing: 15.12.2017
(51) Int. Cl.: F01D 25/20, F02C 7/32, F02C 7/36, F01D 15/10

(54) **TRACTION DRIVE TRANSMISSION FOR GAS TURBINE ENGINE ACCESSORY GEARBOX**
ZUGANTRIEBSGETRIEBE FÜR GASTURBINENMOTORHILFSGERÄTEGETRIEBE
TRANSMISSION À ENTRAÎNEMENT PAR TRACTION POUR BOÎTE DE VITESSES D'ACCESSOIRE DE MOTEUR À TURBINE À GAZ

(30) Priority: 16.12.2016 US 201662435342 P
(43) Date of publication of application: 20.06.2018
(73) Proprietor: Raytheon Technologies Corporation, Farmington, CT 06032 (US)
(72) Inventor: SUCIU, Gabriel L., Glastonbury, CT 06033 (US); MERRY, Brian, Andover, CT 06232 (US); SHERIDAN, William G., Southington, CT 06489 (US); McCUNE, Michael E., Colchester, CT 06415 (US)
(74) Representative: Dehns

(56) References cited:
- EP-A2- 1 031 717
- EP-A2- 1 106 870
- EP-A2- 2 320 067
- EP-A2- 2 584 174

## Description

### BACKGROUND

This disclosure relates to a traction drive transmission for an accessory drive gearbox of a gas turbine engine.

A gas turbine engine typically includes a fan section, a compressor section, a combustor section, and a turbine section. Air entering the compressor section is compressed and delivered into the combustor section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

A typical gas turbine engine utilizes one or more gearboxes to drive accessory components, such as generators, fuel pumps and oil pumps. Each of the accessory drive components must be driven at a desired rotational speed. As a result, the accessory is coupled to either the low or high speed spool and geared accordingly to obtain the speed at which the accessory operates more efficiently. Thus, it is not uncommon to use one gearbox coupled to the low speed spool to drive lower speed accessory drive components, and use a separate gearbox coupled to the high speed spool to drive the other accessory drive components at a higher speed.

One gearbox has been proposed in which the accessory drive components are driven by a single towershaft. Other gearboxes have been proposed in which some accessory drive components are driven by a first towershaft, and other accessory drive components are driven by a second towershaft.

EP 2 320 067 A2 discloses a prior art gas turbine engine assembly as set forth in the preamble of claim 1.

EP 1 106 870 A2 discloses a prior art method and apparatus for driving an aircraft generator at constant speed.

### SUMMARY

From a first aspect, the invention provides a gas turbine engine assembly as recited in claim 1.

In an embodiment of the above, the multispeed transmission includes an output shaft coupled to the at least one accessory component, and the multispeed transmission varies a rotational speed of the output shaft relative to the first towershaft during operation.

In a further embodiment of any of the foregoing embodiments, the multispeed transmission is a traction drive transmission.

In a further embodiment of any of the foregoing embodiments, the at least one accessory component includes at least one of an electric machine and a hydraulic pump.

A further embodiment of any other embodiments includes an electronic engine control coupled to the multispeed transmission that causes the output shaft to rotate within a defined range.

In a further embodiment of any of the foregoing embodiments, the second turbine shaft is rotatable at a higher speed than the first turbine shaft during operation.

In a further embodiment of any of the foregoing embodiments, the multispeed transmission includes an output shaft coupled to the at least one accessory component, and the multispeed transmission varies a rotational speed of the output shaft relative to the first towershaft during operation.

In a further embodiment of any of the foregoing embodiments, the multispeed transmission is a continuously variable transmission defining a continuous range of effective gear ratios.

A further embodiment of any other embodiments includes a second towershaft rotatably coupled to the second turbine shaft. The accessory drive gearbox includes a housing in which the first set of gears and a second set of gears are arranged. The first towershaft interconnects the first set of gears and the first turbine shaft, and the second towershaft interconnects the second set of gears and the second turbine shaft.

The invention also provides a method of driving accessories through an accessory gearbox of a gas turbine engine as recited in claim 10.

In an embodiment of the above, the multispeed transmission includes an output shaft that drives the at least one accessory component, and the step of driving the multispeed transmission includes varying a rotational speed of the output shaft relative to the first towershaft.

In a further embodiment of any of the foregoing embodiments, the step of driving a multispeed transmission includes driving the at least one accessory component within a first range of rotational speeds that is less than a second range of rotational speeds of the first towershaft.

In a further embodiment of any of the foregoing embodiments, the multispeed transmission is a traction drive transmission.

In a further embodiment of any of the foregoing embodiments, the at least one accessory component includes at least one of an electric machine and a hydraulic pump.

In a further non-limiting embodiment of the foregoing assembly, an electric machine is driven by the traction drive transmission.

### BRIEF DESCRIPTION OF THE DRAWINGS

The disclosure can be further understood by reference to the following detailed description when considered in connection with the accompanying drawings wherein:
Figure 1 schematically illustrates a gas turbine engine embodiment.
Figure 2 is a schematic view illustrating an exemplary accessory drive gearbox driven by both high and low speed spools.
Figure 3 is a perspective view of a portion of the accessory drive gearbox with the accessory drive components mounted thereto.

### DETAILED DESCRIPTION

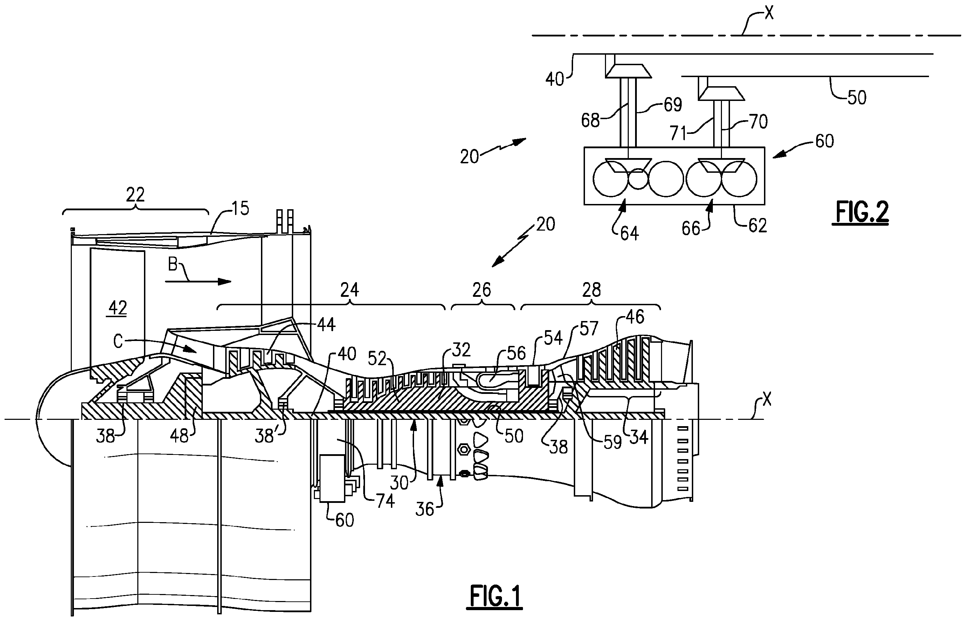

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmenter section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary gas turbine engine 20 generally includes a low speed spool 30 and a high speed spool 32 mounted for rotation about an engine central longitudinal axis X relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in the exemplary gas turbine engine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis X which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The gas turbine engine 20 in one example is a high-bypass geared aircraft engine. In a further example, the gas turbine engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the gas turbine engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the gas turbine engine 20 is designed for a particular flight condition - typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1150 ft / second (350.5 meters/second).

Referring to Figure 2 with continuing reference to Figure 1, the gas turbine engine 20 includes an accessory drive gearbox 60, or gearbox, that is rotationally driven by both the inner and outer shafts 40, 50. The accessory drive gearbox 60 includes a housing 62 within which first and second sets of gears 64, 66 are arranged. A first towershaft 68 extends through a strut 69 to interconnect the inner shaft 40 to the first set of gears 64. The first towershaft 68 can drive the first set of gears 64 through a layshaft, for example. A second towershaft 70 extends through a strut 71 to interconnect the outer shaft 50 to the second set of gears 66. The second towershaft 70 can drive the second set of gears 66 through a layshaft, for example. In another example, the first towershaft 68 could interconnect to the outer shaft 50 and the second towershaft 70 could interconnect to the inner shaft 40.

Although the exemplary accessory drive gearbox 60 is described as incorporating the first and second sets of gears 64, 66, another example of the accessory drive gearbox 60 could include a set of gears driven by the first towershaft 68, without any gears being driven by the second towershaft 70. Yet another example of the accessory drive gearbox 60 could include a set of gears driven by the second towershaft 70, without any gears being driven by the first towershaft 68.

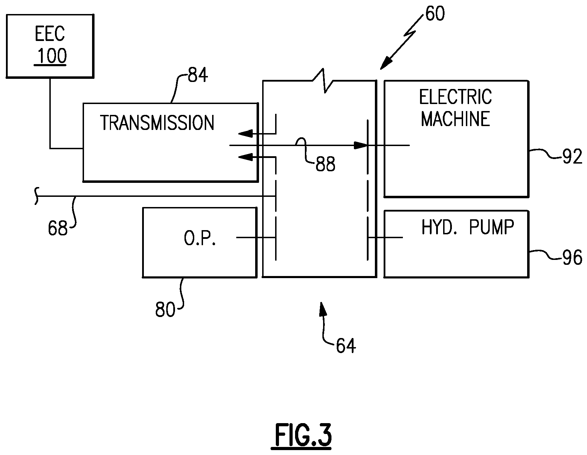

Referring now to FIG. 3, with continuing reference to FIGS. 1 and 2, a portion of the exemplary accessory drive gearbox 60 utilizes the first set of gears 64 to rotatably drive an oil pump 80 and a transmission 84. An output shaft 88 from the transmission 84 drives an electric machine 92 and a hydraulic pump 96. The first towershaft 68 is driven by the inner shaft 40 to rotatably drive the first set of gears 64.

In this example, the oil pump 80 is driven by the first towershaft 68 such that the rotational speed of the oil pump 80 varies linearly with the rotational speed of the first towershaft 68.

The electric machine 92 and the hydraulic pump 96 are driven by the first towershaft 68, but through the transmission 84. The transmission 84 can step up or step down the rotational speed of the output shaft 88 from the transmission 84 relative to the rotational speed of the first towershaft 68. This permits the electric machine 92 and the hydraulic pump 96 to rotate relative to the first towershaft 68 at different ratios.

Although the oil pump 80 is directly driven by the first towershaft 68, other examples could include directly driving other accessories in addition to, the oil pump 80 with the first towershaft 68.

Although the electric machine 92 and the hydraulic pump 96 are driven by the output shaft 88 from the transmission 84, other examples could include driving other accessories instead of, or in addition to, the electric machine 92 or the hydraulic pump 96.

During operation, the inner shaft 40 can experience a greater range of rotational speeds that the outer shaft 50. That is, the speed excursion for the inner shaft 40 can be higher than the speed excursion for the outer shaft 50. In a specific non-limiting embodiment, the inner shaft 40 can operate at speed excursions of up to 80% during operation of the gas turbine engine 20, whereas the outer shaft 50 can operate at speed excursions of up to 30% during operation of the gas turbine engine 20.

In this exemplary embodiment, the first towershaft 68 is geared to the inner shaft 40, such that the rotational speed of the first towershaft 68 and the first set of gears 64 varies linearly with the rotational speed of the inner shaft 40. Also, the second towershaft 70 is geared to the outer shaft 50 so that the rotational speed of the second towershaft 70 and the second set of gears 66 varies linearly with the rotational speed of the outer shaft 50.

The transmission 84 addresses issues associated with rotating the electric machine 92 and the hydraulic pump 96 with a rotatable input from the first towershaft 68 from the inner shaft 40. In the exemplary embodiments, the transmission 84 can vary the rotational speed of the output shaft 88 relative to the rotational speed of the first towershaft 68 to rotate the electric machine 92 and hydraulic pump 96 at a desired rotational speed.

An electronic engine control (EEC) 100 can control the transmission 84 so that the output shaft 88 is rotated at a desired speed or within a desired range.

In this example, the transmission 84 is a traction drive or multispeed transmission. The transmission 84 lacks a plurality of fixed gear ratios and instead can change through a continuous range of effective gear ratios. The transmission 84 can be considered a continuously variable transmission (CVT) in some examples.

In this example, the electric machine 92 is an integrated drive generator or a variable frequency generator that receives a rotational input to generate power utilized by components of the gas turbine engine 20. The transmission 84 permits operating the electric machine 92 to be driven in a narrower rpm range while still being driven by rotation of the inner shaft 40 and the first towershaft 68.

The hydraulic pump 96 generally moves hydraulic fluid needed to move components of an air frame to which the gas turbine engine 20 is mounted. The transmission 84 permits operating the hydraulic pump 96 to be driven in a narrower rpm range while still being driven by rotation of the inner shaft 40 and the first towershaft 68.

The oil pump 80 is driven at a fixed ratio relative to the speed of the first towershaft 68. That is, the transmission 84 transitioning between its continuous range of effective gear ratios does not substantially change a ratio of rotational speeds between the first towershaft 68 and the oil pump 80.

In this example, the oil pump 80 is dedicated to supplying oil to the number 1 bearing systems 38', which incorporates thrust bearings directly supporting the inner shaft 40. The thrust bearings are tapered bearings in some examples.

The rotational speed of the first towershaft 68 increases when the rotational speed of the inner shaft 40 increases. The inner shaft 40 may require additional lubrication, such as oil, directed to bearing systems 38 supporting the inner shaft 40 when the rotational speed of the inner shaft 40 increases.

The increased lubrication demands due to increasing the rotational speed of the inner shaft 40 are met by increasing the rotational input speed to the oil pump 82. In other words, the amount of oil moved to the number 1 bearing system 38' varies linearly with the rotational speed of the inner shaft 40. If the oil pump 82 were instead varying linearly with the rotational speed of the outer shaft 50, the oil pump 82 may move more oil than is required for lubrication. The excess oil would need to recirculated, or accommodated in some other way, which results in losses.

An added feature of coupling rotation of the oil pump 82 with rotation of the inner shaft 40 is that the inner shaft 40 spins with the fan 42. Thus, during a windmilling event when the fan 42 is spinning without being driven by the inner shaft 40, the oil pump 80 can continue to pump oil lubricating the bearings associated with the inner shaft 40, including bearing system 38 supporting a fan rotor of the fan 42 and the geared architecture 48 (Figure 1). If the oil pump 80 were decoupled from rotation with the inner shaft 40, another pump or an electronic pump could be required to move oil to lubricate the fan 42 when windmilling.

Features of the some of the disclosed examples include driving accessory components of an accessory gearbox using a traction drive transmission. This can provide an idle thrust reduction, a reduction in EGT and mission fuel burn.

It should also be understood that although a particular component arrangement is disclosed in the illustrated embodiment, other arrangements will benefit herefrom.

Although the different examples have specific components shown in the illustrations, embodiments of this invention are not limited to those particular combinations.

Although an example embodiment has been disclosed, a worker of ordinary skill in this art would recognize that certain modifications would come within the scope of the claims. For that reason, the following claims should be studied to determine their true scope and content.

## Claims

1. A gas turbine engine assembly comprising:
a turbine section (28) having first and second turbines (46, 54) mounted for rotation about a common rotational axis (X) within an engine static structure (36);
first and second turbine shafts (40, 50) coaxial with one another and to which the first and second turbines (46, 54) are respectively operatively mounted, wherein the first and second turbine shafts (40, 50) are inner and outer shafts (40, 50), respectively, and the first and second turbines (46, 54) are low and high pressure turbines (46, 54), respectively;
a fan (42) connected to the first turbine shaft (40); an accessory drive gearbox (60);
a first towershaft (68) interconnecting the accessory drive gearbox (60) and the first turbine shaft (40); and
a multispeed transmission (84) interconnecting the accessory drive gearbox (60) and at least one accessory component (92; 96);
wherein the first towershaft (68) is geared to the first turbine shaft (40) such that a rotational speed of the first towershaft (68) and a first set of gears (64) of the accessory drive gearbox (60) varies linearly with a rotational speed of the first turbine shaft (40), with the multispeed transmission (84) driven by the first set of gears (64), **characterised in that**
the assembly further comprises an oil pump (80) driven by the first set of gears (64) at a fixed ratio relative to the rotational speed of the first towershaft (68), wherein the oil pump (80) delivers fluid to a bearing system (38; 38') including a bearing that supports the first turbine shaft (40), and the first towershaft (68) is rotatably coupled to the first turbine shaft (40).

2. The gas turbine engine assembly of claim 1, wherein the multispeed transmission (84) is a traction drive transmission (84).

3. The gas turbine engine assembly of claim 1 or 2, wherein the at least one accessory component (92; 96) includes at least one of an electric machine (92) and a hydraulic pump (96).

4. The gas turbine engine assembly of any preceding claim, wherein the second turbine shaft (50) is rotatable at a higher speed than the first turbine shaft (40) during operation.

5. The gas turbine engine assembly of any preceding claim, wherein the multispeed transmission (84) includes an output shaft (88) coupled to the at least one accessory component (92; 96), and the multispeed transmission (84) varies a rotational speed of the output shaft (88) relative to the first towershaft (68) during operation.

6. The gas turbine engine assembly of claim 5, further comprising an electronic engine control (100) coupled to the multispeed transmission (84) that causes the output shaft (88) to rotate within a defined range.

7. The gas turbine engine assembly of any preceding claim, wherein the multispeed transmission (84) is a continuously variable transmission (84) defining a continuous range of effective gear ratios.

8. The gas turbine engine assembly of any preceding claim, further comprising a second towershaft (70) rotatably coupled to the second turbine shaft (50), wherein the accessory drive gearbox (60) includes a housing (62) in which the first set of gears (64) and a second set of gears (66) are arranged, the second towershaft (70) interconnecting the second set of gears (66) and the second turbine shaft (50).

9. The gas turbine engine assembly of any preceding claim, further comprising:
a geared architecture (48), wherein the first turbine shaft (40) is configured to drive the fan (42) through the geared architecture (48).

10. A method of driving accessories (92; 96) through an accessory gearbox (60) of a gas turbine engine (20), comprising:
rotating a first turbine shaft (40) to drive a first towershaft (68), the first turbine shaft (40) mounted for rotation about a common rotational axis (X) with a second turbine shaft (50), the first turbine shaft (40) coupled to a first turbine (46), and the second turbine shaft (50) coupled to a second turbine (54);
driving a first set of gears (64) of an accessory drive gearbox (60) with the first towershaft (68);
driving a multispeed transmission (84) with the first set of gears (64) to rotate at least one accessory component (92; 96) at a first speed that differs from a second speed of the first towershaft (68);
driving an oil pump (80) with the first set of gears (64) to supply oil to a bearing system (38; 38'), the bearing system (38; 38') including a bearing supporting the first turbine shaft (40), and the first turbine shaft (40) coupled to a geared architecture (48), wherein the step of driving the oil pump (80) includes supplying oil to the bearing system (38; 38') during a windmilling event;
driving a fan (42) through the geared architecture (48) such that the fan (42) rotates at a lower speed than the first turbine shaft (40); and
rotating the second turbine shaft (50) at a higher speed than the first turbine shaft (40).

11. The method of claim 10, wherein the multispeed transmission (84) includes an output shaft (88) that drives the at least one accessory component (92; 96), and the step of driving the multispeed transmission (84) includes varying a rotational speed of the output shaft (88) relative to the first towershaft (68).

12. The method of claim 10 or 11, wherein the step of driving a multispeed transmission (84) includes driving the at least one accessory component (92; 96) within a first range of rotational speeds that is less than a second range of rotational speeds of the first towershaft (68).

13. The method of claim 12, wherein the multispeed transmission (84) is a traction drive transmission (84).

## Patentansprüche

1. Gasturbinentriebwerksanordnung, umfassend:
einen Turbinenabschnitt (28) mit einer ersten und zweiten Turbine (46, 54), die zur Drehung um eine gemeinsame Drehachse (X) innerhalb einer statischen Struktur (36) des Triebwerks montiert sind;
eine erste und zweite Turbinenwelle (40, 50), die koaxial zueinander liegen und an welche die erste und zweite Turbine (46, 54) jeweils betriebsfähig montiert sind, wobei die erste und zweite Turbinenwelle (40, 50) eine Innen- beziehungsweise Außenwelle (40, 50) sind und die erste und zweite Turbine (46, 54) eine Nieder- beziehungsweise Hochdruckturbine (46, 54) sind; ein Gebläse (42), das mit der ersten Turbinenwelle (40) verbunden ist;
ein Hilfsgeräteantriebsgetriebe (60);
einen ersten Turmschaft (68), der das Hilfsgeräteantriebsgetriebe (60) und die erste Turbinenwelle (40) miteinander verbindet; und
ein Mehrstufengetriebe (84), das das Hilfsgeräteantriebsgetriebe (60) und mindestens eine Hilfsgerätekomponente (92; 96) miteinander verbindet;
wobei der erste Turmschaft (68) derart auf die erste Turbinenwelle (40) ausgerichtet ist, dass eine Drehzahl des ersten Turmschafts (68) und ein erster Satz Zahnräder (64) des Hilfsgeräteantriebsgetriebes (60) linear mit einer Drehzahl der ersten Turbinenwelle (40) variieren, wobei das Mehrstufengetriebe (84) durch den ersten Satz Zahnräder (64) angetrieben wird, **dadurch gekennzeichnet, dass**
die Anordnung ferner eine Ölpumpe (80) umfasst, die durch den ersten Satz Zahnräder (64) in einem festen Verhältnis relativ zu der Drehzahl des ersten Turmschafts (68) angetrieben wird, wobei die Ölpumpe (80) einem Lagersystem (38; 38'), das ein Lager beinhaltet, das die erste Turbinenwelle (40) trägt, Fluid zuführt und der erste Turmschaft (68) drehbar an die erste Turbinenwelle (40) gekoppelt ist.

2. Gasturbinentriebwerksanordnung nach Anspruch 1, wobei das Mehrstufengetriebe (84) ein Zugantriebsgetriebe (84) ist.

3. Gasturbinentriebwerksanordnung nach Anspruch 1 oder 2, wobei die mindestens eine Hilfsgerätekomponente (92; 96) mindestens eine von einer elektrischen Maschine (92) und einer Hydraulikpumpe (96) beinhaltet.

4. Gasturbinentriebwerksanordnung nach einem der vorhergehenden Ansprüche, wobei die zweite Turbinenwelle (50) während des Betriebs bei einer höheren Drehzahl als die erste Turbinenwelle (40) drehbar ist.

5. Gasturbinentriebwerksanordnung nach einem der vorhergehenden Ansprüche, wobei das Mehrstufengetriebe (84) eine Ausgangswelle (88) beinhaltet, die an die mindestens eine Hilfsgerätekomponente (92; 96) gekoppelt ist, und das Mehrstufengetriebe (84) eine Drehzahl der Ausgangswelle (88) relativ zu dem ersten Turmschaft (68) während des Betriebs verändert.

6. Gasturbinentriebwerksanordnung nach Anspruch 5, ferner umfassend eine elektronische Triebwerkssteuerung (100), die an das Mehrstufengetriebe (84) gekoppelt ist, das ein Drehen der Ausgangswelle (88) innerhalb eines definierten Bereichs herbeiführt.

7. Gasturbinentriebwerksanordnung nach einem der vorhergehenden Ansprüche, wobei das Mehrstufengetriebe (84) ein stufenlos verstellbares Getriebe (84) ist, das einen zusammenhängenden Bereich wirksamer Übersetzungsverhältnisse definiert.

8. Gasturbinentriebwerksanordnung nach einem der vorhergehenden Ansprüche, ferner umfassend einen zweiten Turmschaft (70), der drehbar an die zweite Turbinenwelle (50) gekoppelt ist, wobei das Hilfsgeräteantriebsgetriebe (60) ein Gehäuse (62) beinhaltet, in welchem der erste Satz Zahnräder (64) und ein zweiter Satz Zahnräder (66) angeordnet sind, wobei der zweite Turmschaft (70) den zweiten Satz Zahnräder (66) und die zweite Turbinenwelle (50) miteinander verbindet.

9. Gasturbinentriebwerksanordnung nach einem der vorhergehenden Ansprüche, ferner umfassend:
eine Getriebearchitektur (48), wobei die erste Turbinenwelle (40) dazu konfiguriert ist, das Gebläse (42) durch die Getriebearchitektur (48) hindurch anzutreiben.

10. Verfahren zum Antrieb von Hilfsgeräten (92; 96) durch ein Hilfsgeräteantriebsgetriebe (60) eines Gasturbinentriebwerks (20) hindurch, umfassend:
Drehen einer ersten Turbinenwelle (40) zum Antreiben eines ersten Turmschafts (68), wobei die erste Turbinenwelle (40) zur Drehung um eine gemeinsame Drehachse (X) mit einer zweiten Turbinenwelle (50) montiert ist, wobei die erste Turbinenwelle (40) an eine erste Turbine (46) gekoppelt ist und die zweite Turbinenwelle (50) an eine zweite Turbine (54) gekoppelt ist;
Antreiben eines ersten Satzes Zahnräder (64) eines Hilfsgeräteantriebsgetriebes (60) mit dem ersten Turmschaft (68) ;
Antreiben eines Mehrstufengetriebes (84) mit dem ersten Satz Zahnräder (64) zum Drehen mindestens einer Hilfsgerätekomponente (92; 96) bei einer ersten Drehzahl, die sich von einer zweiten Drehzahl des ersten Turmschafts (68) unterscheidet;
Antreiben einer Ölpumpe (80) mit dem ersten Satz Zahnräder (64), um einem Lagersystem (38; 38') Öl zuzuführen, wobei das Lagersystem (38; 38') ein Lager beinhaltet, das die erste Turbinenwelle (40) trägt, und die erste Turbinenwelle (40) an eine Getriebearchitektur (48) gekoppelt ist, wobei der Schritt zum Antrieb der Ölpumpe (80) ein Zuführen von Öl in das Lagersystem (38; 38') während eines Autorotationsereignisses beinhaltet;
Antreiben eines Gebläses (42) durch die Getriebearchitektur (48) hindurch derart, dass sich das Gebläse (42) bei einer geringeren Drehzahl als die erste Turbinenwelle (40) dreht; und
Drehen der zweiten Turbinenwelle (50) bei einer höheren Drehzahl als die erste Turbinenwelle (40).

11. Verfahren nach Anspruch 10, wobei das Mehrstufengetriebe (84) eine Ausgangswelle (88) beinhaltet, die die mindestens eine Hilfsgerätekomponente (92; 96) antreibt, und der Schritt zum Antrieb des Mehrstufengetriebes (84) ein Variieren der Drehzahl der Ausgangswelle (88) relativ zu dem ersten Turmschaft (68) beinhaltet.

12. Verfahren nach Anspruch 10 oder 11, wobei der Schritt zum Antrieb eines Mehrstufengetriebes (84) ein Antreiben der mindestens einen Hilfsgerätekomponente (92; 96) innerhalb eines ersten Drehzahlbereichs beinhaltet, der kleiner als ein zweiter Drehzahlbereich des ersten Turmschafts (68) ist.

13. Verfahren nach Anspruch 12, wobei das Mehrstufengetriebe (84) ein Zugantriebsgetriebe (84) ist.

## Revendications

1. Ensemble moteur à turbine à gaz comprenant :
une section de turbine (28) ayant des première et seconde turbines (46, 54) montées pour tourner autour d'un axe de rotation commun (X) à l'intérieur d'une structure statique de moteur (36) ;
des premier et second arbres de turbine (40, 50) partageant l'un et l'autre le même axe et sur lesquels les première et seconde turbines (46, 54) sont respectivement montées de manière fonctionnelle, dans lequel les premier et second arbres de turbine (40, 50) sont des arbres interne et externe (40, 50), respectivement, et les première et seconde turbines (46, 54) sont des turbines basse et haute pression (46, 54), respectivement ;
une soufflante (42) reliée au premier arbre de turbine (40) ; une boîte de vitesses d'entraînement d'accessoire (60) ;
un premier arbre de transmission (68) reliant la boîte de vitesses d'entraînement d'accessoire (60) et le premier arbre de turbine (40) ; et
une transmission à plusieurs vitesses (84) reliant la boîte de vitesses d'entraînement d'accessoire (60) et au moins un composant accessoire (92 ; 96) ;
dans lequel le premier arbre de transmission (68) est engrené sur le premier arbre de turbine (40) de sorte qu'une vitesse de rotation du premier arbre de transmission (68) et d'un premier ensemble d'engrenages (64) de la boîte de vitesses d'entraînement d'accessoire (60) varie linéairement avec une vitesse de rotation du premier arbre de turbine (40), la transmission à plusieurs vitesses (84) étant entraînée par le premier ensemble d'engrenages (64), **caractérisé en ce que** l'ensemble comprend en outre une pompe à huile (80) entraînée par le premier ensemble d'engrenages (64) à un rapport fixe par rapport à la vitesse de rotation du premier arbre de transmission (68), dans lequel la pompe à huile (80) délivre du fluide à un système de palier (38 ; 38') comportant un palier qui supporte le premier arbre de turbine (40), et le premier arbre de transmission (68) est couplé de manière rotative au premier arbre de turbine (40).

2. Ensemble moteur à turbine à gaz selon la revendication 1, dans lequel la transmission à plusieurs vitesses (84) est une transmission à entraînement par traction (84).

3. Ensemble moteur à turbine à gaz selon la revendication 1 ou 2, dans lequel l'au moins un composant accessoire (92 ; 96) comporte au moins une d'une machine électrique (92) et d'une pompe hydraulique (96).

4. Ensemble moteur à turbine à gaz selon une quelconque revendication précédente, dans lequel le second arbre de turbine (50) peut tourner à une vitesse plus élevée que le premier arbre de turbine (40) en fonctionnement.

5. Ensemble moteur à turbine à gaz selon une quelconque revendication précédente, dans lequel la transmission à plusieurs vitesses (84) comporte un arbre de sortie (88) couplé à l'au moins un composant accessoire (92 ; 96), et la transmission à plusieurs vitesses (84) fait varier une vitesse de rotation de l'arbre de sortie (88) par rapport au premier arbre de transmission (68) en fonctionnement.

6. Ensemble moteur à turbine à gaz selon la revendication 5, comprenant en outre une commande de moteur électronique (100) couplée à la transmission à plusieurs vitesses (84) qui fait tourner l'arbre de sortie (88) dans une plage définie.

7. Ensemble moteur à turbine à gaz selon une quelconque revendication précédente, dans lequel la transmission à plusieurs vitesses (84) est une transmission à variation continue (84) définissant une plage continue de rapports de vitesses effectifs.

8. Ensemble moteur à turbine à gaz selon une quelconque revendication précédente, comprenant en outre un second arbre de transmission (70) couplé en rotation au second arbre de turbine (50), dans lequel la boîte de vitesses d'entraînement d'accessoire (60) comporte un carter (62) dans lequel le premier ensemble d'engrenages (64) et un second ensemble d'engrenages (66) sont agencés, le second arbre de transmission (70) reliant le second ensemble d'engrenages (66) et le second arbre de turbine (50).

9. Ensemble moteur à turbine à gaz selon une quelconque revendication précédente, comprenant en outre :
une architecture à engrenages (48), dans lequel le premier arbre de turbine (40) est conçu pour entraîner la soufflante (42) à travers l'architecture à engrenages (48).

10. Procédé d'entraînement d'accessoires (92 ; 96) à travers une boîte de vitesses d'accessoire (60) d'un moteur à turbine à gaz (20), comprenant :
la rotation d'un premier arbre de turbine (40) pour entraîner un premier arbre de transmission (68), le premier arbre de turbine (40) étant monté pour tourner autour d'un axe de rotation commun (X) avec un second arbre de turbine (50), le premier arbre de turbine (40) étant couplé à une première turbine (46), et le second arbre de turbine (50) étant couplé à une seconde turbine (54) ;
l'entraînement d'un premier ensemble d'engrenages (64) d'une boîte de vitesses d'entraînement d'accessoire (60) avec le premier arbre de transmission (68) ;
l'entraînement d'une transmission à plusieurs vitesses (84) avec le premier ensemble d'engrenages (64) pour faire tourner au moins un composant accessoire (92 ; 96) à une première vitesse qui diffère d'une seconde vitesse du premier arbre de transmission (68) ;
l'entraînement d'une pompe à huile (80) avec le premier ensemble d'engrenages (64) pour fournir de l'huile à un système de palier (38 ; 38'), le système de palier (38 ; 38') comportant un palier supportant le premier arbre de turbine (40), et le premier arbre de turbine (40) étant couplé à une architecture à engrenages (48), dans lequel l'étape d'entraînement de la pompe à huile (80) comporte la fourniture d'huile au système de palier (38 ; 38') pendant un événement de fonctionnement en moulinet ; l'entraînement d'une soufflante (42) à travers l'architecture à engrenages (48) de sorte que la soufflante (42) tourne à une vitesse inférieure à celle du premier arbre de turbine (40) ; et
la rotation du second arbre de turbine (50) à une vitesse plus élevée que le premier arbre de turbine (40).

11. Procédé selon la revendication 10, dans lequel la transmission à plusieurs vitesses (84) comporte un arbre de sortie (88) qui entraîne l'au moins un composant accessoire (92 ; 96), et l'étape d'entraînement de la transmission à plusieurs vitesses (84) comporte la variation d'une vitesse de rotation de l'arbre de sortie (88) par rapport au premier arbre de transmission (68).

12. Procédé selon la revendication 10 ou 11, dans lequel l'étape d'entraînement d'une transmission à plusieurs vitesses (84) comporte l'entraînement de l'au moins un composant accessoire (92 ; 96) à l'intérieur d'une première plage de vitesses de rotation qui est inférieure à une seconde plage de vitesses de rotation du premier arbre de transmission (68).

13. Procédé selon la revendication 12, dans lequel la transmission à plusieurs vitesses (84) est une transmission à entraînement par traction (84).
